# EUROPÄISCHE PATENTSCHRIFT

(11) **EP 1 385 178 B1**
(45) Veröffentlichungstag und Bekanntmachung des Hinweises auf die Patenterteilung: **08.06.2005**
(21) Anmeldenummer: 03015134.4
(22) Anmeldetag: 04.07.2003
(51) Int. Cl.: H01C 10/10

(54) **Magnetisches Drehpotentiometer**
Magnetic rotary potentiometer
Potentiomètre rotatif magnétique

(30) Priorität: 22.07.2002 CH 12842002
(43) Veröffentlichungstag der Anmeldung: 28.01.2004
(73) Patentinhaber: DIAL ENGINEERING AG, 8181 Höri (CH)
(72) Erfinder: Kammer, Peter, 8184 Bachenbülach (CH)
(74) Vertreter: Lusuardi, Werther Giovanni, Dr.

(56) Entgegenhaltungen:
- EP-A- 0 665 416
- FR-A- 2 786 266

## Beschreibung

Die Erfindung betrifft ein magnetisches Drehpotentiometer nach dem Oberbegriff des Anspruchs 1.

Magnetische Drehpotentiometer stellen eine durch Drehen eines Drehbetätigers veränderbare elektrische Größe, beispielsweise eine Ausgangsspannung oder einen Widerstand, bereit. Sie sind daher wie ihr mechanisches Pendent, der Drehwiderstand, zur Verwendung als Stellglied in elektronischen Schaltungen geeignet. Wegen ihres rauscharmen Schaltverhaltens, ihrer Verschleißfreiheit und Schmutzresistenz sind sie zudem zur Steuerung elektrischer Anlagen, insbesondere zur Drehzahlsteuerung elektrischer Antriebe, wie sie beispielsweise in Haushaltsgeräten Verwendung finden, besonders gut geeignet.

Ein magnetisches Drehpotentiometer nach dem Oberbegriff des Anspruchs 1 ist aus der US 5 789 917 oder EP-A-0 665 416 bekannt. Ein Rotor mit einem Drehbetätiger, einem mit diesem verbundenen topfförmigen metallischen Gehäuse und einem ins offene Ende des Gehäuses eingesetzten hohlzylindrischen Permanentmagneten ist drehbar auf einen Stator aufgesetzt, der zwei durch einen Luftspalt voneinander getrennte Halbzylinder und einen in dem Luftspalt angeordneten Magnetfeldsensor umfaßt. Der Permanentmagnet besteht aus zwei radial in einander entgegengesetzter Richtung magnetisierten Hohlzylinderhälften.

Die radiale Magnetisierung der Hohlzylinderhälften bedingt eine Krümmung der Feldlinien im Inneren des Permanentmagneten, die an den Kontaktstellen der beiden Hohlzylinderhälften besonders stark ausgeprägt ist. Hierdurch ergibt sich eine nichtlineare Beziehung zwischen der Winkelposition des Drehbetätigers und dem zugehörigen Signal des magnetischen Drehpotentiometers. Um diesem Effekt entgegenzuwirken, sind bei dem bekannten Drehpotentiometer den Magnetfluß lenkende Halbzylinder vorgesehen.

Der Erfindung liegt deshalb die Aufgabe zugrunde, ein magnetisches Drehpotentiometer nach dem Oberbegriff des Anspruchs 1 zu schaffen, das bei vereinfachtem Aufbau einen hohen Grad an Linearität zwischen der Winkelposition des Drehbetätigers und der elektrischen Größe aufweist.
Diese Aufgabe wird entsprechend den Merkmalen des Anspruchs 1 gelöst.

Demnach ist ein diametral magnetisierter Ringmagnet vorgesehen, der ein gleichförmiges Magnetfeld in seinem Inneren erzeugt. Die Feldlinien erstrecken sich im wesentlichen geradlinig und parallel von einer Ringhälfte zur gegenüberliegenden Ringhälfte. Hierdurch wird ein hoher Grad an Linearität zwischen der Winkelposition des Drehbetätigers und der elektrischen Größe erreicht.

Die diametrale Magnetisierung kann derart erfolgen, daß Feldlinien, die durch die Innenfläche oder Außenfläche in den Ringmagnet eindringen, diesen auch durch die Innenfläche bzw. Außenfläche wieder verlassen, so daß keine Feldlinie den Ringmagnet von der Innenfläche zur Außenfläche durchdringt. Hierdurch ist das Magnetfeld im Inneren des Ringmagnets im wesentlichen vom Magnetfeld außerhalb des Magnets entkoppelt. Externe Störungen durch beispielsweise Magnetfelder, die beim Betrieb zu steuernder Maschinen entstehen können, oder durch benachbarte Magnete, pflanzen sich deshalb nicht oder nur schwach ins Innere des Ringmagnets fort. Zudem ergibt sich ein schwaches und gleichmäßiges Magnetfeld im Inneren des Ringmagnets, so daß eine hochgradig lineare Beziehung zwischen der Winkelposition des Drehbetätigers und der elektrischen Größe gewährleistet ist.

Die diametrale Magnetisierung kann auch derart erfolgen, daß die Feldlinien den Ringmagnet von der Innenfläche zur Außenfläche durchdringen. Hierdurch entsteht eine höhere Feldstärke im Inneren des Ringmagnets und eine hohe Resistenz gegenüber relativ schwachen externen Magnetfeldern, insbesondere Wechselfeldern.

Vorzugsweise ist der Ringmagnet um seine Achse drehbar, während der elektrisch mit einer zu steuernden Anlage oder gegebenenfalls mit einer Auswerteschaltung zu verbindende Magnetfeldsensor stationär in einem vorbestimmten Abstand zur Innenfläche des Ringmagnets bleibt. Ist die Masse des Ringmagnets hoch, kann alternativ hierzu der Ringmagnet stationär und der Magnetfeldsensor drehbar sein. Der mechanische Aufbau kann demjenigen bekannter Drehpotentiometer entsprechen, insbesondere dem des oben beschriebenen magnetischen Drehpotentiometers.

Der Ringmagnet kann aus beliebigem Material sein, solange gewährleistet ist, daß seine Magnetisierung dauerhaft auch bei widrigen Betriebsbedingungen erhalten bleibt. Als geeignet haben sich insbesondere kunststoffgebundene NdFeB Magnete herausgestellt.

Geeignete Magnetfeldsensoren sind Hallsensoren, die zweckmäßigerweise tangential zur Innenfläche des Ringmagnets ausgerichtet werden und als elektrische Größe eine Spannung bereitstellen. Die Spannung beschreibt über den Stellbereich des Drehbetätigers von 0° bis 360° eine Periode einer Sinuskurve mit einem Maximum und einem Minimum. Zwischen den Extrempunkten ist der Spannungsverlauf nahezu linear, so daß der Stellbereich in zwei nutzbare Abschnitte kleiner 180° aufgeteilt ist.

Soll das magnetische Drehpotentiometer als Ersatz für ein mechanisches Drehpotentiometer dienen, die elektrische Größe also ein Widerstand sein, so ist der Magnetfeldsensor zweckmäßigerweise eine Feldplatte. Da Feldplatten nur den Betrag des Magnetfeldvektors erfassen, weist der Widerstandsverlauf zwei Maxima und zwei Nullpunkte auf, wodurch vier nutzbare lineare Stellbereiche kleiner 90° entstehen.

Darüber hinaus sind je nach Anwendungsgebiet auch andere Magnetfeldsensoren wie z.B. magnetisch gesteuerte Transistoren oder dergleichen verwendbar.

Zweckmäßigerweise ist der Ringmagnet von einem Jochring umgeben, der den Magnetkreis außerhalb des Ringmagnets schließt. Hierdurch wird das Magnetfeld des Ringmagnets verstärkt, so daß ein Ringmagnet geringerer Leistung verwendbar ist. Zudem stellt das Joch eine Abschirmung gegenüber externen Störfeldern dar. Der Jochring besteht zweckmäßigerweise aus Stahl, Eisen oder Blech und weist vorzugsweise die gleiche Höhe wie der Ringmagnet auf.

Die Höhe der aktiven Fläche des Magnetfeldsensors ist zweckmäßigerweise kleiner oder gleich der Höhe der benachbarten Innenfläche des Ringmagnets, um eine Erfassung des oberhalb und unterhalb des Ringmagnets gekrümmten Magnetfelds auszuschließen.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt schematisch ein magnetisches Drehpotentiometer im Schnitt;
Fig. 2 zeigt den Feldlinienverlauf des Ringmagnets des Drehpotentiometers aus Fig. 1 in Draufsicht; und
Fig. 3 zeigt den Feldlinienverlauf eines weiteren Ringmagnets.
Fig. 4 zeigt ein Meßdiagramm der Flußdichte der den Magnetfeldsensor senkrecht durchquerenden Magnetfeldkomponente als Funktion der Winkelposition des Drehbetätigers.

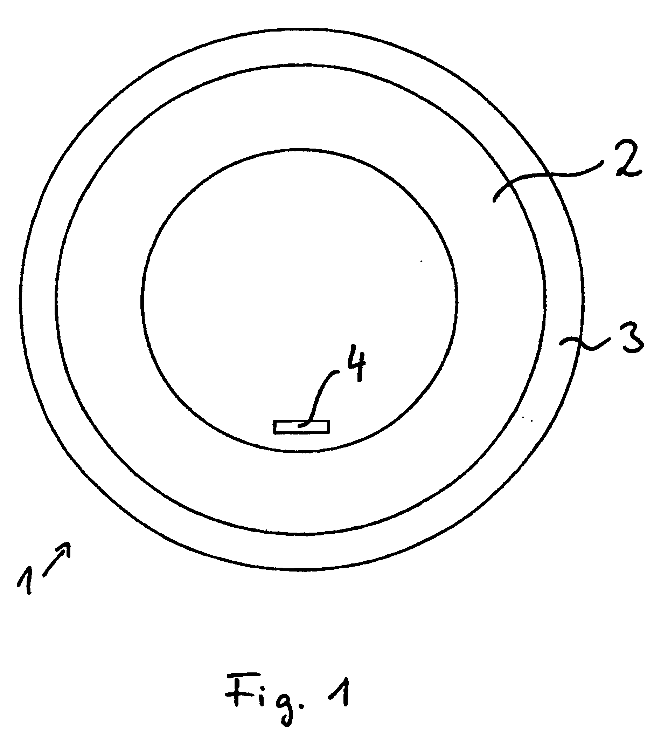

Das in Fig. 1 dargestellte Drehpotentiometer 1 umfaßt einen diametral magnetisierten Ringmagnet 2, der hier von einem Drehbetätiger 3 um seine Mittelachse drehbar gehalten ist, und einen feststehenden, von der Innenfläche des Ringmagnets 2 beabstandeten, tangential zur Innenfläche des Ringmagnets 2 angeordneten Hallsensor 4. Zwischen dem Drehbetätiger 3 und dem Ringmagnet 2 kann ein nicht dargestellter Jochring vorgesehen sein.

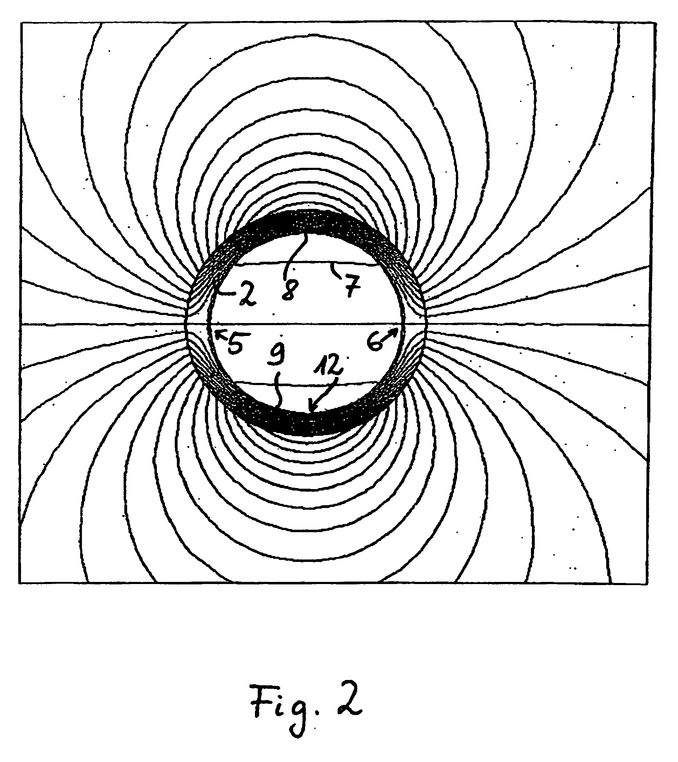

Der Ringmagnet 2 kann den in Fig. 2 dargestellten Feldlinienverlauf zwischen zwei einander diametral gegenüberliegenden entgegensetzten Polen 5, 6 aufweisen. Feldlinien 7 verlaufen nahezu geradlinig zwischen der den Pol 5 aufweisenden Ringhälfte und der den Pol 6 aufweisenden Ringhälfte, wobei Feldlinien 7, die durch die Innenfläche oder Außenfläche in den Ringmagnet 2 eindringen, diesen auch durch die Innenfläche bzw. Außenfläche wieder verlassen, so daß keine Feldlinie 7 den Ringmagnet 2 von der Innenfläche zur Außenfläche durchdringt. Der dargestellte Ringmagnet 2 kann aus zwei endseitig jeweils entgegengesetzte Pole aufweisen Halbringen 8, 9 zusammengesetzt sein, die jeweils mit ihren gleichnamigen Polen unter Bildung der Pole 5, 6 zusammengesetzt sind.

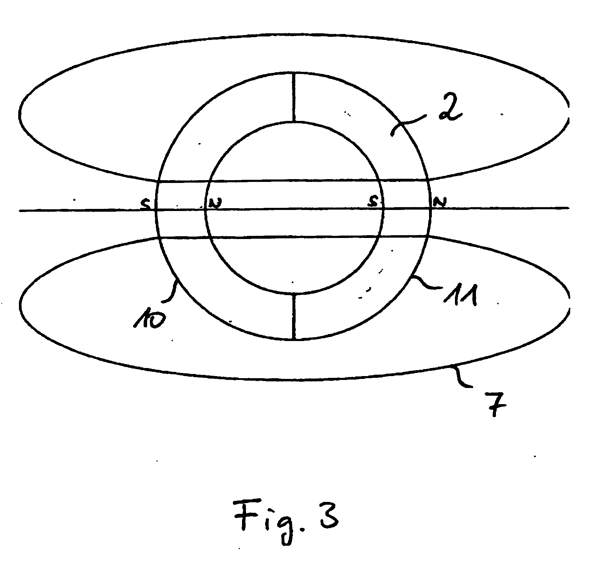

Eine weitere Ausgestaltung des Ringmagnets 2 ist in Fig. 3 dargestellt. Auch hier verlaufen die Feldlinien 7 nahezu geradlinig innerhalb des Ringmagnets 2 zwischen der in der Fig. rechten und der linken Ringhälfte 10, 11 durchqueren jedoch den Ringmagnet 2 zwischen seiner Innen- und Außenfläche. Hierdurch entsteht eine höhere Feldstärke im Inneren des Ringmagnets, so daß eine gute Resistenz gegenüber externen Magnetfeldern gegeben ist, wie sie z.B. beim Betrieb von zu steuernden Maschinen entstehen können.

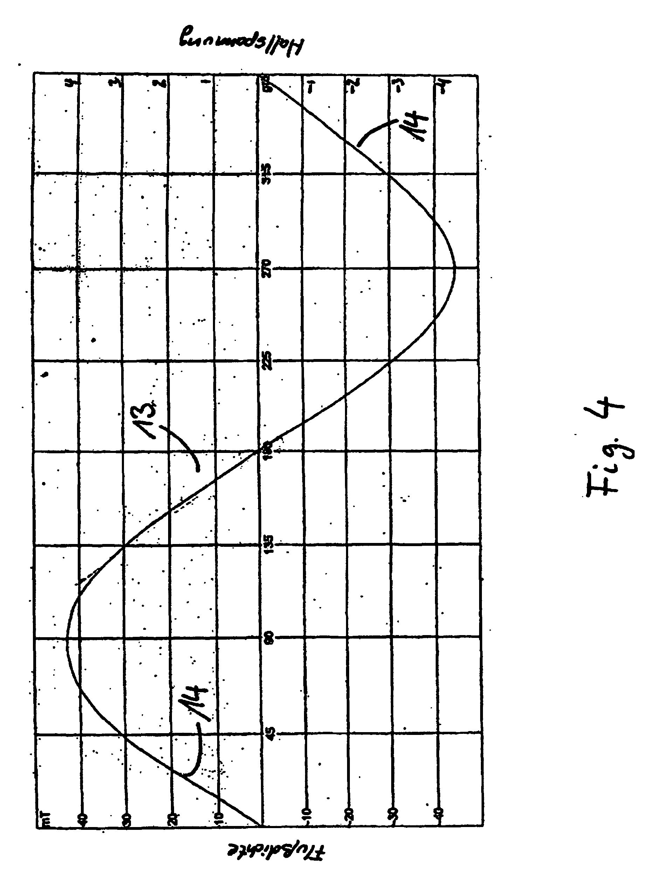

Fig. 4 zeigt die Flußdichte der zur inneren Oberfläche des Ringmagnets 2 senkrechten Komponente des Magnetfelds in mT und die korrespondierende Hallspannung des Hallsensors 4 aus Fig. 1 in willkürlichen Einheiten als Funktion der Winkelposition des Drehbetätigers 3. Die Winkelposition wird hierbei im Uhrzeigersinn beginnend bei 0° am Punkt 12 in Fig. 2 gemessen.

Flußdichte und Hallspannung durchlaufen eine Periode einer Sinuskurve. Bei 0° verlaufen die Feldlinien 7 ausschließlich parallel zum Hallsensor 4, so daß die senkrechte Komponente des Magnetfelds 0mT beträgt und entsprechend die Hallspannung verschwindet. Bei 90° verlaufen die Feldlinien ausschließlich senkrecht zum Hallsensor 4 und erzeugen das Maximum in Fig. 4. Bei 180° tritt wie bei 0° ein Nulldurchgang auf. Im Bereich zwischen 180° und 360° durchqueren die Feldlinien den Hallsensor 4 nunmehr in entgegengesetzter Richtung, so daß der Kurvenverlauf negativ wird. Bei 270° zeigt sich ein Minimum, das im Idealfall betragsmäßig dem Maximum bei 90° entspricht, im dargestellten Meßdiagramm jedoch aufgrund von Justierungstoleranzen geringfügig hiervon abweicht.

Der Kurvenverlauf zeigt nahezu lineare Abschnitte 13, 14 die sich zwischen etwa 120° und 250° bzw. zwischen 290° und 70° erstrecken. Zweckmäßigerweise wird die einstellbare Winkelposition des Drehbetätigers 3 in an sich bekannter Weise mechanisch auf einen der beiden Abschnitte 13, 14 beschränkt.

Ist anstelle des Hallsensors 4 eine Feldplatte vorgesehen, ist der Kurvenverlauf zwischen 180° und 360° um die Abszisse gespiegelt und an den Nullstellen bei 0° und 180° gerundet. Lineare Bereiche ergeben sich dann zwischen etwa 20° und 70°, 110° und 160°, 200° und 250° sowie zwischen 290° und 340°.

## Patentansprüche

1. Magnetisches Drehpotentiometer (1) mit einem Ringmagnet (2), einem benachbart zur Innenfläche des Ringmagnets (2) angeordneten Magnetfeldsensor (4) und einem Drehbetätiger (3), mit dem die radiale Position des Magnetfeldsensors (4) innerhalb des Ringmagnets (2) einstellbar ist,
**dadurch gekennzeichnet,**
**daß** der Ringmagnet (2) diametral magnetisiert ist und die Feldlinien (7) geradlinig und parallel von einer Ringhälfte (10) zur gegenüberliegenden Ringhälfte (11) verlaufen.

2. Drehpotentiometer nach Anspruch 1, **dadurch gekennzeichnet, daß** geschlossene Feldlinien (7) nur jeweils durch die Innenfläche oder die Außenfläche des Ringmagnets (2) ein- und auslaufen.

3. Drehpotentiometer nach Anspruch 1, **dadurch gekennzeichnet, daß** geschlossene Feldlinien (7) durch die Innenfläche des Ringmagnets (2) ein- oder auslaufen und durch die Außenfläche des Ringmagnets (2) aus- bzw. einlaufen.

4. Drehpotentiometer nach Anspruch 1 oder 2, **dadurch gekennzeichnet, daß** der Ringmagnet (2) zwei Halbringe (8, 9) umfaßt, die jeweils endseitig entgegengesetzte Pole aufweisen und mit ihren gleichnamigen Polen zusammengesetzt sind.

5. Drehpotentiometer nach einem der Ansprüche 1 bis 4, **dadurch gekennzeichnet, daß** der Ringmagnet (2) von einem Jochring aus Eisen, Stahl oder Blech umgeben ist.

6. Drehpotentiometer nach einem der Ansprüche 1 bis 5, **dadurch gekennzeichnet, daß** der Magnetfeldsensor (4) ein Hallsensor ist.

7. Drehpotentiometer nach einem der Ansprüche 1 bis 6, **dadurch gekennzeichnet, daß** der Magnetfeldsensor (4) eine Feldplatte ist.

8. Drehpotentiometer nach einem der Ansprüche 1 bis 7, **dadurch gekennzeichnet, daß** der Magnetfeldsensor (4) tangential zur Innenfläche des Ringmagnets (2) ausgerichtet ist.

9. Drehpotentiometer nach einem der Ansprüche 1 bis 8, **dadurch gekennzeichnet, daß** die Höhe der aktiven Fläche des Magnetfeldsensors (4) kleiner oder gleich der Höhe der benachbarten Innenfläche des Ringmagnets (2) ist.

## Claims

1. A magnetic rotary potentiometer (1) having a ring magnet (2), a magnetic-field sensor (4) arranged adjacent to the inner surface of the ring magnet (2), and a rotary actuator (3) permitting to adjust the radial position of the magnetic-field sensor(4) inside the ring magnet (2).
**characterised in that**
the ring magnet (2) is diametrically magnetized and that the field lines (7) extending from one ring half (10) to the opposing ring half (11) take a rectilinear and parallel course.

2. The rotary potentiometer as claimed in claim 1, **characterised in that** closed field lines (7) enter the ring magnet (2)and re-emanate therefrom only through its inner surface or its outer surface, respectively.

3. The rotary potentiometer as claimed in claim 1, **characterised in that** closed field lines (7) enter the ring magnet (2) or re-emanate therefrom through its inner surface and emanate from or re-enter the ring magnet (2) through its outer surface.

4. The rotary potentiometer as claimed in claim 1 or 2, **characterised in that** the ring magnet (2) comprises two half-rings (8, 9) having unlike poles provided in their respective end portions and which are joined together with their respective like poles.

5. The rotary potentiometer as claimed in one of the claims 1 to 4, **characterised in that** the ring magnet (2) is surrounded by a yoke ring made of iron, steel or metal plate.

6. The rotary potentiometer as claimed in one of the claims 1 to 5, **characterised in that** the magnetic-field sensor (4) is a Hall probe.

7. The rotary potentiometer as claimed in one of the claims 1 to 6, **characterised in that** the magnetic-field sensor (4) is magnetoresistor.

8. The rotary potentiometer as claimed in one of the claims 1 to 7, **characterised in that** the magnetic-field sensor (4) is disposed tangentially to the inner surface of the ring magnet (2).

9. The rotary potentiometer as claimed in one of the claims 1 to 8, **characterised in that** the height of the active surface of the magnetic-field sensor (4) is inferior or equal to the height of the adjacent inner surface of the ring magnet (2).

## Revendications

1. Potentiomètre rotatif magnétique (1) avec un aimant annulaire (2), un capteur de champ magnétique (4) disposé de manière contiguë à la surface intérieure voisine de l'aimant annulaire (2) et un actionneur rotatif (3) permettant de régler la position radiale du capteur de champ magnétique (4) à l'intérieur de l'aimant annulaire (2),
**caractérisé en ce que**
l'aimant annulaire (2) est à aimantation diamétrale et **en ce que** les lignes de champ (7) s'étendent de manière linéaire et parallèle depuis une moitié d'anneau (10) jusqu'à la moitié d'anneau opposée (11).

2. Potentiomètre rotatif selon la revendication 1, **caractérisé en ce que** des lignes de champ fermées (7) n'entrent et ne sortent respectivement que par la surface intérieure ou la surface extérieure de l'aimant annulaire (2).

3. Potentiomètre rotatif selon la revendication 1, **caractérisé en ce que** des lignes de champ fermées (7) entrent, ou sortent, par la surface intérieure de l'aimant annulaire (2) et sortent, ou entrent, par la surface extérieure de l'aimant annulaire (2).

4. Potentiomètre rotatif selon la revendication 1 ou 2, **caractérisé en ce que** l'aimant annulaire (2) comprend deux demi-anneaux (8, 9), lesquels présentent respectivement à leurs extrémités des pôles opposés et qui sont joints ensemble au niveau de leurs pôles respectifs de même polarité.

5. Potentiomètre rotatif selon l'une des revendications 1 à 4, **caractérisé en ce que** l'aimant annulaire (2) est entouré d'un anneau de culasse en fer, en acier ou en tôle.

6. Composant selon l'une des revendications 1 à 5, **caractérisé en ce que** le capteur de champ magnétique (4) est un capteur à effet Hall.

7. Potentiomètre rotatif selon l'une des revendications 1 à 6, **caractérisé en ce que** le capteur de champ magnétique (4) est une magnétorésistance.

8. Potentiomètre rotatif selon l'une des revendications 1 à 7, **caractérisé en ce que** le capteur de champ magnétique (4) est orienté tangentiellement à la surface intérieure de l'aimant annulaire (2).

9. Potentiomètre rotatif selon l'une des revendications 1 à 8, **caractérisé en ce que** la hauteur de la surface active du capteur de champ magnétique (4) est inférieure ou égale à la hauteur de la surface intérieure voisine de l'aimant annulaire (2).
